(19)

Europäisches
Patentamt
European
Patent Office
Office européen
des brevets

(11) **EP 3 689 822 A1**

(12) **EUROPEAN PATENT APPLICATION**

(43) Date of publication:
**05.08.2020 Bulletin 2020/32**

(51) Int Cl.:
*C01F 7/44* *(2006.01)*     *B01J 21/04* *(2006.01)*

(21) Application number: **19154220.8**

(22) Date of filing: **29.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Studiengesellschaft Kohle MbH**
**45470 Mülheim an der Ruhr (DE)**

(72) Inventors:
- **AMRUTE, Amol**
  **45468 Mülheim an der Ruhr (DE)**
- **SCHREYER, Hannah**
  **68163 Mannheim (DE)**
- **SCHUETH, Ferdi**
  **45470 Mülheim an der Ruhr (DE)**

(54) **A PROCESS FOR THE PREPARATION OF HIGH SURFACE AREA ALPHA ALUMINA AND THE USE THEREOF**

(57)   The present invention refers to a process for the preparation of a high surface area nanoparticulate alpha alumina.

**Figure 1**

EP 3 689 822 A1

**Description**

The present invention refers to a process for the preparation of a high surface area nanoparticulate alpha alumina from boehmite

Aluminium oxide is an important class of material with a wide range of technological applications, e.g. in ceramics, catalysis, skin-care and biomedical products, owing to its outstanding mechanical, chemical, electrical, and optical properties. Besides, alumina has a rich crystal chemistry due to its existence in seven crystallographic forms, namely, chi ($\chi$), kappa ($\kappa$), eta ($\eta$), gamma ($\gamma$), delta ($\delta$), theta ($\theta$), and alpha ($\alpha$). The first six forms are called as transition aluminas as they can be converted from one to another by annealing and the last one, called as corundum, is the thermodynamically most stable form of alumina. These aluminas are typically prepared by the thermal route which includes calcination of aluminum hydroxide ($Al(OH)_3$, commonly known as gibbsite, produced by Bayer process of bauxite refining) or oxide hydroxide ($\gamma$-AlOOH, called as boehmite) at different temperatures (Ivanova, Kinetics and Catalysis 2012, 53, 425-439) as stipulated in **Equation 1**:

$$Al(OH)_3 \xrightarrow{180\text{-}300°C} \gamma\text{-}AlOOH \xrightarrow{550°C} \gamma\text{-}Al_2O_3 \xrightarrow{850°C} \delta\text{-}Al_2O_3 \xrightarrow{1050°C} \theta\text{-}Al_2O_3 \xrightarrow{1200°C} \alpha\text{-}Al_2O_3 \quad (Eq.\ 1)$$

The formation of transition aluminas in this route occurs via dehydration at mild-high temperature (i.e. up to 550°C) to form $\gamma$-$Al_2O_3$, followed by the topotactic transformation of the latter to $\delta$-$Al_2O_3$ and $\theta$-$Al_2O_3$. Thus, transition aluminas, particularly gamma phase, generally possess a high specific surface area (70-150 $m^2$/g) and are attractive for applications such as in catalysis and adsorption. However, they have poor hydrothermal stability. For example, $\gamma$-$Al_2O_3$ is widely applied as a catalyst support in Fischer-Tropsch catalyst formulation (Aad et al., ChemCatChem 2017, 9, 2106-2117). However, since water is produced as the byproduct of the Fischer-Tropsch synthesis process; it causes the hydration of $\gamma$-$Al_2O_3$ to form boehmite according to **Equation 2**:

$$\gamma\text{-}Al_2O_3 \rightarrow \gamma\text{-}AlOOH \quad (Eq.\ 2)$$

This has an adverse effect on the catalyst and process stability. In contrast, corundum possesses an exceptional hydrothermal stability and can withstand the undesired hydration process, but it has a very low surface area because of its highly energy-uphill nucleation from transition alumina (Apparent activation energy = 485 kJ/mol, Steiner et al. Journal of the American Ceramic Society 1971, 54, 412-413) requiring temperature above 1200°C, which leads to uncontrolled crystal growth owing to sintering (Shelleman et al., Journal of Non-Crystalline Solids 1986, 82, 277-285). The $\alpha$-$Al_2O_3$ materials obtained in such a way usually have a low surface area of < 10 $m^2$/g. Besides, the thermal route leads to vermicular microstructures of $\alpha$-$Al_2O_3$ which do not achieve a full densification. This is critical for ceramic applications (Yarbrough et al., Journal of Materials Research 1987, 2, 494-515). Thus, it is intriguing to produce nanoc-rystalline $\alpha$-$Al_2O_3$ with a high surface area (> 100 $m^2$/g). This is only possible by reducing the formation temperature of the corundum phase. -

A method known in the art involves the obtainment of corundum from diaspore ($\alpha$-AlOOH). The latter is a crystallographic polymorph of boehmite and has a hexagonal close packing of oxygen atoms, alike the $\alpha$-$Al_2O_3$ structure. Thus, this material can be transformed topotactically to corundum at a much lower temperature (500-600°C) and thus can preserve high surface area (McHale et al., Science 1997, 277, 788-791; Perrotta et al., Materials Research Innovations 1998, 2, 33-38). However, the preparation of stable diaspore is very energy demanding (Yanagida and Yamagichi, Journal of the Ceramic Association of Japan 1966, 74, 94-100; Tsuchida and Kodaira, Journal of Materials Science 1990, 25, 4423-4426), as it involves the hydrothermal treatment of boehmite powder with the seeded growth method (i.e. adding seeds of natural diaspore to a mixture of boehmite and water and optionally a base as well) at 450°C and 1200 bar for 35 days. This makes the overall process unattractive.

Another approach reported in the literature comprises a liquid-feed flame spray pyrolysis of nano-transition-aluminas to obtain nano-$\alpha$-$Al_2O_3$ (Laine et al. Nature Materials 2006, 5, 710-712). However, it suffers from the incomplete transformation to $\alpha$-$Al_2O_3$ and requires a long premixing (24 h milling followed by ultrasonication) of 1-10% alumina in ethanol and subsequent combustion, releasing green-house gas. Besides, from the perspective of applications in catalysis, minor amounts of transition alumina could be a source of catalyst deactivation due to a possible hydration as it is faced by catalysts based on transition alumina (Aad et al., ChemCatChem 2017, 9, 2106-2117).

Yet another known method involves the hydrothermal treatment of boehmite powder in water and 96.6% $H_2SO_4$ (0.3-0.4 wt.% of $H_2O$) solution in the presence of $\alpha$-$Al_2O_3$ seeds (5-10 wt.% of boehmite) and a morphology modifier e.g. colloidal silica (1-10 wt.% of $\alpha$-$Al_2O_3$) at 430-450°C and 103 bar for 6-10 days (Suchanek and Garcés, CrystEngComm 2010, 12, 2996-3002). This route provides $\alpha$-$Al_2O_3$, but the specific surface area achieved was still low (21 $m^2$/g).

Besides, the overall approach involves harsh and energy-intensive conditions.

Yet another approach available in open literature suggests the use of the high energy ball milling of nanocrystalline γ-$Al_2O_3$ to obtain α-$Al_2O_3$ (Zielinski et al., Journal of Materials Research 1993, 8, 2985-2992). It involves the dry milling of γ-$Al_2O_3$ powders at room temperature using a hardened steel or a tungsten carbide (WC) jar with a SPEX 8000 laboratory ball mill. The γ-$Al_2O_3$ precursors of different surface area (80, 105, 208 $m^2$/g) were investigated. In general, the surface area of all γ-$Al_2O_3$ precursors was reduced to similar extent upon milling for 6 h in hardened steel jar and balls by a reduction factor of 2.2 (surface area reduction factor = surface area before ball milling/surface area after ball milling). This factor was even higher (3.2) for WC jar and balls. Thus, for a precursor with a 208 $m^2$/g, the maximum surface area achieved was 65 $m^2$/g and 92 $m^2$/g for WC and hardened steel jar and balls, respectively. However, in the latter case, the transformation of γ-$Al_2O_3$ precursor was only about 60% in 6 h, i.e. remaining γ-$Al_2O_3$ will also contribute to this surface area value. Whereas in the case WC jar and balls, which is reported to achieve full conversion in 6 h, a significant contamination of WC (24 wt.%) was observed.

US5641469 discloses a process for at least partial conversion of γ-$Al_2O_3$ to α-$Al_2O_3$ in presence of α-$Al_2O_3$ seeds (at least 0.1% by weight based on total amount of γ-$Al_2O_3$) by a mechanochemical treatment sufficient to convert at least part of the gamma alumina to alpha alumina in the essential absence of water at temperatures below 100°C. The α-$Al_2O_3$ seeds are claimed to be uniformly dispersed in the precursor γ-$Al_2O_3$ by a sol-gel seeding process. A mechanochemical treatment as mentioned was suggested to comprise dry milling for a time sufficient to convert at least about 5 wt.% of the gamma alumina to alpha alumina. The obtained mixture was then subjected to a heat treatment at a temperature sufficient to complete the conversion of the gamma alumina to alpha alumina.

Thus, ball milling might be an approach for producing alpha alumina from gamma alumina. However, the above mentioned efforts on the mechanochemical route suffer from (1) longer milling times, which led to the contamination of milling jar and ball materials, (2) incomplete conversion of gamma alumina to alpha alumina even with the addition of seeds, which thus necessitates a post calcination step (at 1150-1200°C) to achieve the full conversion of gamma alumina, and (3) requires a nanocrystalline γ-$Al_2O_3$ precursor with the specific surface area > 250 $m^2$/g so as to achieve α-$Al_2O_3$ with a surface area up to 100 $m^2$/g. These issues restrict a wider application of this method.

Thus, there is a need for a suitable process for preparing nanocrystalline alpha alumina with high specific surface area under more convenient conditions of time and process characteristics.

The present invention provides a suitable mechanochemical activation process that enables the production of nanoparticulate alpha alumina by converting γ-AlOOH·$xH_2O$ with $0 \leq x < 2$ into alpha alumina nanoparticles in a particle size range of 1 to 50, preferably 1 to 30 nm, and a high specific BET surface area of at least 90 $m^2$/g, by subjecting said γ-AlOOH·$xH_2O$ to a milling process in a ball mill with a milling jar and balls in a weight ratio of balls to said γ-AlOOH·$xH_2O$ of 1 to 200, preferably 5 to 100, in a temperature range below the conversion temperature of nanocrystalline γ-AlOOH·$xH_2O$ to γ-$Al_2O_3$, preferably in a temperature range of 10 to 200°C and for a period of time of 1 to 10 hours without the need of addition of seeds. The conversion temperature of nanocrystalline γ-AlOOH·$xH_2O$ to γ-$Al_2O_3$ usually starts at about 400°C and the conversion reaction is getting faster if the temperature increases up to 600°C ,

In more detail, the present invention is directed to a process of converting boehmite compounds of the formula γ-AlOOH·$xH_2O$ with $0 \leq x < 2.0$ into alpha alumina by subjecting said boehmite compounds to a milling process in a ball mill such as a vibration mill or a planetary mill with a milling jar and balls, preferably made of WC or hardened steel in a weight ratio of balls to said boehmite compounds of the formula γ-AlOOH·$xH_2O$ with $0 \leq x < 2.0$ in the range of 1 to 200, preferably in the range of 5 to 100, more preferably in the range of 10 to 100, and in a temperature range below the conversion temperature of boehmite to γ-$Al_2O_3$, preferably in a temperature range of 10 to 200°C, more preferably from 20 to 120°C, and for a period of time of 0.5 to 20 hours, preferably 1 to 10 hours, Thus, α-$Al_2O_3$ obtained in the process of the present invention generally has a BET surface area of at least 90 $m^2$/g, preferably at least 100 $m^2$/g, more preferably at least 120 $m^2$/g, and even more preferably at least 130 $m^2$/g; and the particle size of the nanoparticulate alpha alumina particles obtained in the process of the present invention is in the range of 1 to 50 nm, preferably in the range of 1 to 30 nm, measured by TEM. Generally, the number average particle size distribution d50 of the nanoparticulate alpha alumina particles is in the range of 5 to 30 nm, preferably in the range of 10 to 20 nm. Nanoparticulate in the sense of the invention means that the particles have a particle size in the defined range and may comprise one or more nanocrystalline domains.

As stated above, said aluminum precursor, boehmite, used in the process of the present invention is defined by the chemical formula γ-AlOOH·$xH_2O$ with $0 \leq x < 2.0$. Thus, the boehmite compound of the present invention might have additional bound water. Boehmite with additional bound water is also called as pseudoboehmite. Thus, according to present invention pseudoboehmite could also be used to obtain the nanocrystalline alpha alumina by mechanochemical activation. The content of additional water i.e. x is preferably in the range of 0 to 0.5. Said boehmite compound is generally used with a particle size in the range of 2 to 200 nm, preferably in the range of 4 to 100 nm.

The said precursor compound can be obtained by one or the other of the known methods. Such known methods could include - but are not limited to - (i) calcination of gibbsite at temperatures of up to 325°C (Sidheswaran and Bhat, Indian Journal of Chemical Technology 1997, 4, 206-209), (ii) hydrothermal treatment of gibbsite (Santos et al., Materials Research 2009, 12, 437-445, Filho et al., Materials Research 2016, 19, 659-668), (iii) sol-gel routes (Kharat et al., Asian Journal of Chemistry 2008, 20, 915-924; Munhoz et al., Materials Science Forum 2015, 820, 131-136), or (iv) modified Bayer process of bauxite refining (Panias and Paspaliaris, Erzmetall 2003, 56, 75-81).

The said mechanochemical activation process of the present invention involves ball milling using a vibration mill, a planetary mill, or any other milling principle/method capable of effecting conversion of boehmite to alpha alumina. The milling jar and balls can be made of Corundum, WC or hardened steel or other suitable materials that are capable to achieve the purpose of the present invention. The use of Corundum is advantageous as no foreign atom is then present in the jar. The milling device could be equipped with external heating device, which would allow applying heat to milling jars during milling. Besides of materials of milling jars and balls, several parameters can be tuned, such as size of jars, number and size of balls, amount of powder, frequency of milling ($f_{mill}$) etc.

Preferably, the size of the ball milling jar is chosen to allow milling of up to 5 kg boehmite or even more in a batch. The size of the balls is chosen to apply sufficient mechanical energy to the boehmite powder and is usually in the range of 1 to 5 cm in diameter.

The basic principles involved, but not limited to, in the above-mentioned ball milling kinds are the impact and friction mechanical forces. These forces can transfer the mechanical energy into the compound being milled which induce its reaction with a particle in its immediate vicinity transforming to new chemical or crystallographic structures. In the case of the present invention, the atomic rearrangement seems to take place transforming the boehmite phase from cubic close-packing (ccp) to alpha alumina having hexagonal close-packing (hcp) of oxygens.

In one embodiment of the present invention, the ball milling was performed in a closed jar. Under these conditions, the ball milling of the boehmite precursor of the present invention enables the complete conversion of the precursor to the alpha phase of aluminum compounds, which contain more than 70% alpha alumina and the rest being diaspore, which is defined by the chemical formula $\alpha$-AlOOH. Thus, the present invention also covers the process for converting $\gamma$-AlOOH·$x$H$_2$O with $0 \le x < 2.0$ into nanoparticulate alpha alumina wherein the milling product is additionally comprising alpha AlOOH, optionally in a weight ratio of up to 30 wt.% of the total amount of nanoparticulate alpha alumina and alpha AlOOH (diaspore).

Thus, diaspore is the crystallographic polymorph of boehmite, which can otherwise be formed from boehmite under very harsh conditions (vide supra). Since diaspore has a hexagonal close packing of its oxygens, alike $\alpha$-Al$_2$O$_3$, it can be topotactically transformed to $\alpha$-Al$_2$O$_3$ by calcining at temperatures 500-600°C. Thus, in an embodiment of the present invention, phase pure alpha $\alpha$-Al$_2$O$_3$ was achieved by calcining the mixture of alpha alumina and diaspore, obtained after ball milling of boehmite, at a temperature between 500-600°C. This provides a material having exclusively the $\alpha$-Al$_2$O$_3$ phase with a specific BET surface area greater than 100 m$^2$/g, preferably greater than 120 m$^2$/g , and more preferably greater than 130 m$^2$/g.

While not wishing to be limited by any theory, it is believed that when starting with boehmite precursor, the transformation to $\alpha$-Al$_2$O$_3$ appears to progress through the formation of diaspore which topotactically transforms to $\alpha$-Al$_2$O$_3$, thereby preserving high surface area. Thus, boehmite first undergoes atomic rearrangement from ccp to hcp. The latter can readily release its water and eventually ends up in $\alpha$-Al$_2$O$_3$ with similar arrangement of oxygens (i.e. hcp). This is clear as the content of $\alpha$-Al$_2$O$_3$ in the ball milled boehmite powder is more than 70% and remaining is diaspore (i.e. about 30%). This means most of the diaspore as formed is transformed to $\alpha$-Al$_2$O$_3$ during ball milling. Thus, for those experts in the art it is understandable that an application of heat during ball milling with a minimum temperature that enables to evolve water from the solid might lead to a complete transformation of diaspore formed in situ by ball milling of boehmite.

The inventors considered that the surface area greater than 120 m$^2$/g could not be achieved from the ball milling of nanocrystalline $\gamma$-Al$_2$O$_3$ as attempted in the literature (Zielinski et al., Journal of Materials Research 1993, 8, 2985-2992), and the inventors found out that the structural water in boehmite, which would be released upon nucleation of alpha alumina, plays a role on creating nanometer-sized alpha alumina particles during milling. According to the inventors, the released water acts as a process control agent, which helps to improve the fracture phenomenon during milling and thus creates smaller particles of a solid.

Furthermore, it was also found in the present invention that the particle size of the boehmite compounds does not have a noticeable influence on the efficiency of milling i.e a full conversion of the boehmite precursor can be achieved by ball milling under equivalent milling conditions. This offers a great flexibility on the choice of the boehmite precursor. Preferably, the particle size of the boehmite compounds used in the present invention is in the range of 2-100 nm. After milling as defined in the description, the particle size of the obtained nanoparticulate $\alpha$-Al$_2$O$_3$ is in the range of 1 to 50 nm, preferably 1-30 nm.

However, it was found beneficial in the present invention to keep the quantity of additional water in boehmite (i.e. $x$ in $\gamma$-AlOOH·$x$H$_2$O) below 20 wt.% (i.e. $x \sim 0.67$, $0 \le x < 0.67$), and preferably below 15 wt.% (i.e. $x \sim 0.5$, $0 \le x < 0.5$). The said quantity of additional water can be adjusted by a simple preheating of the boehmite precursors at temperatures in the range of 120-140°C. This mild temperature pre-treatment does not change the structure of the boehmite as confirmed by X-ray diffraction analysis.

In a further embodiment, the present invention also refers to a process for converting $\gamma$-AlOOH·$x$H$_2$O with $0 \leq x < 2.0$ into nanoparticulate alpha alumina according to preceding description wherein milling is performed upon addition of a metal and/or metal compounds wherein the metal is selected from transition metals, main group metals or mixtures thereof. The metal may preferably be selected from Ti, V, Cr, Mn, Fe, Co, Ni, Cu, Zn, Mo, Se, Sn, Pt, Ru, Rh, Zr, Hf, Re, Pd, W, Ir, Os, Rh, Nb, Ta, Pb, Bi, Au, Ag, Sc, Y, Ce, Pr, Nd, Eu. Preferably, said metal or metal compound is used in particulate form. The metal compound is preferably selected from halides, pseudohalides, nitrates, acid salts, oxides. In this embodiment, the BET surface area of the obtained nanoparticulate alpha alumina loaded with metal may be smaller compared to the same nanoparticulate alpha alumina in the unloaded form.

It was observed that when the milling jar and milling balls made of WC were used, the sample after ball milling was found to contain WC up to 7 wt.%. The latter could come from the abrasion of WC vial and balls during milling. Thus, when alpha alumina free of WC is desired, WC can be removed by known chemical methods (Archer et al., Journal of Analytical Atomic Spectrometry 2003, 18, 1493-1496). For example, WC can be selectively oxidized in an oxidizing solution of HNO$_3$ and H$_2$O$_2$ to tungstic acid and carbon dioxide (**Equation 3**).

$$WC + (O) \rightarrow WO_3 \cdot H_2O \text{ or } H_2WO_4 + CO_2 \qquad\qquad (Eq. 3)$$

Alternatively, the separation might also be possible by methods relying on different densities or wetting behavior, such as sedimentation or flotation.

The process of the present invention is further elaborated in more details through drawings and examples. However, they do not limit the scope of the invention and only intended for the purposes of illustration.

The invention is further illustrated by the following Figures. In the Figures, it is shown:

| | |
|---|---|
| **Figure 1:** | PXRD patterns of (a) boehmite of $d^{Scherrer}$ = 17 nm (denoted as $\gamma$-AlOOH-17), (b) $\gamma$-AlOOH-17 after ball milling, and (c) 3 h ball milled $\gamma$-AlOOH-17 after post-calcination at 550°C in static air for 10 h. The crystalline phases identified in the samples are indicated on the corresponding diffractograms (B = boehmite, $\gamma$-AlOOH, ICDD PDF 21-1307; D = diaspore, $\alpha$-AlOOH, ICDD PDF 05-0355; $\alpha$ = corundum, $\alpha$-Al$_2$O$_3$, ICDD PDF 46-1212). Milling conditions: Vibration mill with WC jar and WC balls, milling time = 3 h, bpr = 40.5, $f_{mill}$ = 25 Hz. |
| **Figure 2:** | (a) TEM, (b) particle size distribution, and (c) HRTEM of nanocrystalline alpha alumina obtained by 3 h ball milling of $\gamma$-AlOOH-17 followed by post-calcination at 550°C in static air for 10 h. |
| **Figure 3:** | PXRD patterns of the boehmite sample described in the caption of Figure 1 (a) before and (b) after ball milling under the same conditions as in the caption of Figure 1, except at lower bpr of 27. The crystalline phase identification is as provided in the caption of Figure 1. |
| **Figure 4:** | PXRD patterns of the boehmite sample described in the caption of Figure 1 (a) before and (b) after ball milling under the same conditions as in the caption of Figure 1, except at lower bpr of 27.6 and using steel milling balls. The crystalline phase identification is as provided in the caption of Figure 1, except unmarked reflection due to iron-containing phases. |
| **Figure 5:** | PXRD patterns of the boehmite sample described in the caption of Figure 1 (a) before and (b) after ball milling in planetary mill. The crystalline phases identified in the samples are indicated on the corresponding diffractograms (B = boehmite, $\gamma$-AlOOH, ICDD PDF 21-1307; $\alpha$ = corundum, $\alpha$-Al$_2$O$_3$, ICDD PDF 46-1212; Fe = metallic Fe, ICDD PDF 06-0696; * = Fe$_3$O$_4$, magnetite, ICDD PDF 26-1136). Milling conditions: Planetary mill with steel jar and steel balls, milling time = 3 h, bpr = 41.4, rpm = 650. |
| **Figure 6:** | PXRD patterns of (a) boehmite of $d^{Scherrer}$ = 20 nm (denoted as $\gamma$-AlOOH-20), (b) $\gamma$-AlOOH-20 after 3 h ball milling under the same conditions as in the caption of Figure 1, and (c) 3 h ball milled $\gamma$-AlOOH-20 after post-calcination at 550°C in static air for 10 h. The crystalline phase identification is as provided in the caption of Figure 1. |
| **Figure 7:** | PXRD patterns of (a) boehmite of $d^{Scherrer}$ = 52 nm (denoted as $\gamma$-AlOOH-52), (b) $\gamma$-AlOOH-52 after 3 h ball milling under the same conditions as in the caption of Figure 1, and (c) 3 h ball milled $\gamma$-AlOOH-52 after post-calcination at 550°C in static air for 10 h. The crystalline |

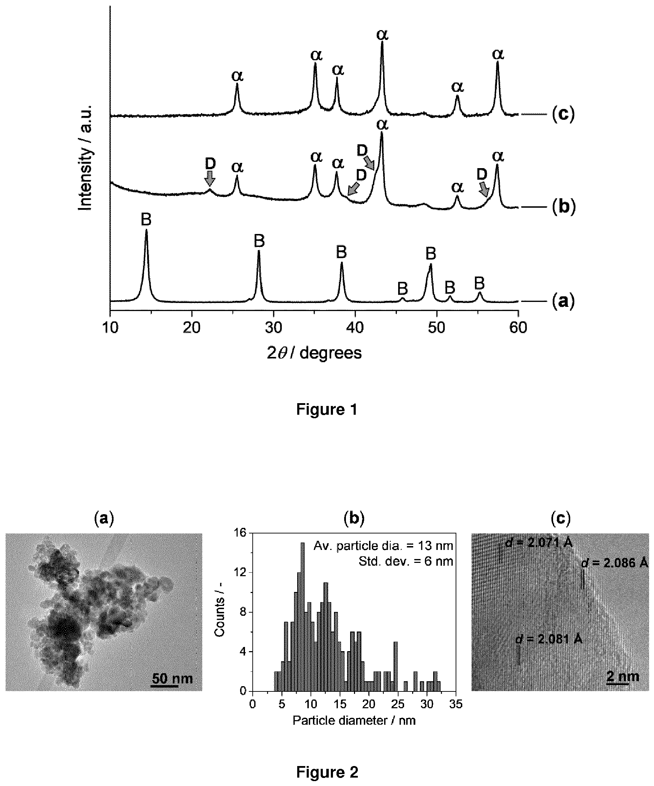

phase identification is as provided in the caption of Figure 1.

| | |
|---|---|
| **Figure 8:** | PXRD patterns of boehmite of $d^{Scherrer}$ = 4 nm (denoted as γ-AlOOH-4) (a) before and (b) after 3 h ball milling under the same conditions as in the caption of Figure 1. The crystalline phase identification is as provided in the caption of Figure 1. |
| **Figure 9:** | Thermogravimetric analysis of boehmite compounds described in Examples 1 through 8. (a) γ-AlOOH-4, (b) γ-AlOOH-4 after drying at 140°C in static air for 12 h (denoted as γ-AlOOH-4-dried), and (c) γ-AlOOH-17, γ-AlOOH-20, and γ-AlOOH-52. |
| **Figure 10:** | PXRD patterns of (a) γ-AlOOH-4, (b) γ-AlOOH-4 after drying at 140°C in static air for 12 h (denoted as γ-AlOOH-4-dried), (c) γ-AlOOH-4-dried after 3 h ball milling under the same conditions as in the caption of Figure 1, and (d) 3 h ball milled γ-AlOOH-4-dried after post-calcination at 550°C in static air for 10 h. The crystalline phase identification is as provided in the caption of Figure 1. |
| **Figure 11:** | PXRD pattern of $\alpha$-$Al_2O_3$ supported cobalt oxide catalyst obtained by ball milling γ-AlOOH-17 and $Co_3O_4$ under the same conditions as in the caption of Figure 1. The crystalline phases identification is as provided in the caption of Figure 1, except O = $Co_3O_4$, ICDD PDF 42-1467; * = WC, ICDD PDF 51-0939. |
| **Comparative Figure 1:** | PXRD patterns of (a) γ-$Al_2O_3$ derived by calcination of γ-AlOOH-17 at 550°C in static air for 5 h (denoted as γ-$Al_2O_3$-17) and (b) γ-$Al_2O_3$-17 after ball milling under the same conditions as in the caption of Figure 1. The crystalline phases identified in the samples are indicated on the corresponding diffractograms (γ = γ-$Al_2O_3$, ICDD PDF 50-0741; $\alpha$ = corundum, $\alpha$-$Al_2O_3$, ICDD PDF 46-1212). |
| **Comparative Figure 2:** | PXRD patterns of (a) γ-$Al_2O_3$ derived by calcination of γ-AlOOH-4 at 550°C in static air for 5 h (denoted as γ-$Al_2O_3$-4) and (b) γ-$Al_2O_3$-4 after ball milling under the same conditions as in the caption of Figure 1. The crystalline phases identified in the samples are indicated on the corresponding diffractograms (γ = γ-$Al_2O_3$, ICDD PDF 50-0741; $\alpha$ = corundum, $\alpha$-$Al_2O_3$, ICDD PDF 46-1212). |

## METHODS

### Ball milling

The ball milling experiments were performed using a Retsch® Mixer Mill MM400, which involves a horizontal vibration motion at a set frequency (herein referred as vibration mill), having two milling jars (25 $cm^3$) made of either WC or stainless steel. The material of milling balls used is also either WC or stainless steel. The ball milling experiments were also performed using a Fritsch Pulverisette, which involves a planetary motion to achieve a high-energy input (herein referred as planetary mill). It is equipped with two milling jars (45 $cm^3$) made of stainless steel. The material of milling media was also stainless steel. In a typical experiment, the milling jar is filled with a precursor powder(s) and milling balls at a desired bpr (defined in **Equation 4**) in an open environment and placed in the vibration or planetary mill after properly closing, followed by setting the milling frequency ($f_{mill}$) for vibration mill or revolutions per minute (rpm) for planetary mill and duration and starting the milling experiment.

$$\text{bpr} = \frac{\text{total weight of all balls used}}{\text{weight of powder}} \qquad \text{(Eq. 4)}$$

where: bpr is ball to powder ratio.

### WC removal from the ball milled sample

The appearance of the sample after ball milling in vibration mill was light gray to gray due to the abrasion of WC vial and balls during milling. The tungsten content in the sample, as determined by EDX analysis, after 3 h ball milling was less than 7 wt.%. As WC has a strong absorption in PXRD, it complicates the identification of other phases present in the sample. Thus, it was removed from the sample, for the accurate characterization purpose, by adapting a literature method (Archer et al., Journal of Analytical Atomic Spectrometry 2003, 18, 1493-1496). In a typical WC removal method adapted in the present invention, one gram ball milled sample was dispersed in 30 cm$^3$ solution of 5% $HNO_3$ in 30% $H_2O_2$ in a round-bottom (RB) flask. The latter was attached to the condenser, slowly heated to 80°C, and stirred at this temperature for 1-2 minutes. The heating bath is removed and the sample was allowed to stand at room temperature for 30 minutes. The white (whitish) solid was separated by centrifugation and dried at 70°C for 12 h. This treatment did not cause any change in the crystallinity of the sample or on the textural properties as confirmed by the powder X-ray diffraction and $N_2$ physisorption analyses of the sample before and after the treatment.

**$N_2$ physisorption**

$N_2$ physisorption at -196°C was carried out using a Micromeritics 3Flex Surface Characterization Analyzer. The samples were evacuated at 140°C for 12 h prior to the measurement. The specific surface area ($S_{BET}$) was calculated from the adsorption data in the relative pressure range of 0.05 to 0.3 using the Brunauer-Emmett-Teller (BET) method (Brunauer et al., Journal of the American Chemical Society 1938, 60, 309-319).

**Thermogravimetric analysis**

Thermogravimetric analysis (TGA) was performed in a NETZSCH STA 449 F3 Jupiter® analyzer connected to a NETZSCH QMS 403 D Aeolos® quadrupole mass spectrometer gas analysis system. Analyses were performed in Ar (40 cm$^3$ STP per min). About 15 mg of sample was placed in the sintered alumina crucible and the temperature was raised from 40°C to 900°C at 10°C/min. Throughout the temperature ramp, atomic mass unit (AMU) 18 ($H_2O$) was monitored; in addition, full scans over the whole mass range were performed at different temperatures.

**Energy-dispersive X-ray spectroscopy**

Energy-dispersive X-ray spectroscopy (EDX) analysis was performed on a Hitachi S-3500N instrument. The microscope was equipped with a Si(Li) Pentafet Plus detector from Texas Instruments.

**Particle Size Measurement**

**- Transmission electron microscopy**

Transmission electron microscopy (TEM) and high resolution (HR) TEM images were recorded using a Hitachi HF-2000 microscope with a cold field-emission cathode at maximum acceleration voltage of 200 kV. Samples were prepared by sprinkling dry specimen on the TEM grid consisting of a lacy carbon film supported by a copper grid. Particle size distribution was determined by measuring the diameters of more than 200 particles from several TEM images of the same sample. The number average particle size (d50) was calculated by adding the measured diameters of all particles together and dividing by the number of particles measured. The d50 was used as Sauter mean diameter (SMD, $d_{32}$) to estimate the surface area based on particle size using the **Equation 5** (Sauter, VDI-Forschungsheft Nr. 279 (1926) und Nr. 312 (1928) ISSN 0042-174X; Wang and Fan, Ch. 2, pp 42-76 in Woodhead Publishing Series in Energy (2013) ISBN 9780857095411).

$$\text{Nanoparticle surface area} = \frac{6}{d_{32} \cdot \rho} \qquad \text{(Eq. 5)}$$

where: $d_{32}$ is the Sauter mean diameter, which is defined as an average of particle size, and p is the density of the powder.

**- Powder X-ray diffraction**

Powder X-ray diffraction (PXRD) was measured using a Stoe STADI P diffractometer operating in reflection mode with Cu K$\alpha$ radiation. Data were recorded in the 10-70° 2θ range with an angular step size of 0.04°. The average particle size was also determined from diffractograms (denoted by d$^{Scherrer}$) by applying the Scherrer equation (**Equation 6**) to the three most intense reflections and taking the average of the obtained values. Thus, for boehmite starting materials, reflections centered at 2θ 14.4, 28.2, and 38.3; and for $\alpha$-$Al_2O_3$ samples, reflections centered at 2θ 35.2, 43.3, and 57.4 were used for the Scherrer determination.

$$d^{\text{Scherrer}} = \frac{K \cdot \lambda}{\beta \cdot \cos\theta} \qquad\qquad (\text{Eq. 6})$$

where: $d^{\text{Scherrer}}$ is the average size of the crystalline domains,
K is a dimensionless shape factor (0.9),
$\lambda$ is the X-ray wavelength used to irradiate the sample (i.e. in this case of Cu X-rays, it was 1.5406 Angstroms),
$\theta$ is the Bragg angle determined from the respective reflection, and
$\beta$ is the line broadening at half the maximum intensity (FWHM), determined according to the **Equation 7:**

$$\beta = (\beta_{\text{sample}}^2 - \beta_{\text{instrument}}^2)^{0.5} \qquad\qquad (\text{Eq. 7})$$

where: $\beta_{\text{sample}}$ is the FWHM of the corresponding reflection used to determine the average crystallite size and $\beta_{\text{instrument}}$ is the FWHM of the due to instrument determined using NIST Si standard

The invention is further illustrated by the following Examples.

## EXAMPLES

### Example 1

Boehmite of $d^{\text{Scherrer}}$ = 17 nm (denoted as $\gamma$-AlOOH-17) was obtained from Sasol. One gram of $\gamma$-AlOOH-17 was charged in the WC milling vial together with WC milling balls to achieve a bpr of 40.5. The milling vial was placed in the vibration mill and the ball milling was performed in the closed environment for 3 h. After the experiment the powder was removed from the vial and subjected for WC removal, followed by characterization by PXRD, $N_2$ physisorption, and TEM/HRTEM analysis.

The PXRD analysis (**Figure 1**) evidenced the full transformation of the boehmite phase in the precursor (**a**) after 3 h ball milling (**b**). Based on PXRD phase analysis, the ball milled sample was composed of more than 70% $\alpha$-$Al_2O_3$ and the remaining being $\alpha$-AlOOH (diaspore) as can be seen from the relative intensity of the corresponding reflections. The $S_{\text{BET}}$ of the starting boehmite was 89 $m^2$/g and after ball milling the $S_{\text{BET}}$ of 125 $m^2$/g was obtained.

A part of the ball milled sample after WC removal was subjected to calcination at 550°C (2°C/min) in static air for 10 h. The calcination fully transformed the remaining diaspore to $\alpha$-$Al_2O_3$, producing the material with sole desired $\alpha$-$Al_2O_3$ phase. The $S_{\text{BET}}$ of the calcined sample was 120 $m^2$/g. TEM image of this sample showed rounded particles in the range of 4-32 nm with TEM-based number average particle size, d50, of 13 nm (std. dev. = 6 nm) (**Figure 2a,b).** Using this d50 in Equation 5, the nanoparticle surface area was calculated to be 118 $m^2$/g (based on density of alpha alumina of 3.9 g/$cm^3$). This matches very well with the BET surface area of 120 $m^2$/g reported above for this sample. Furthermore, application of Scherrer equation to the diffractogram of this sample, according to the procedure described in methods, provided $d^{\text{Scherrer}}$ = 18 nm. The high resolution TEM analysis evidenced a crystalline nature of the sample also at the surface **(Figure 2c**). Determination of d spacing at different areas provided an average value of 2.079 Å, which is similar to 2.085 Å for 113 plane of $\alpha$-$Al_2O_3$.

### Example 2

The ball milling experiment was performed under the same conditions and using the precursor as described in **Example 1,** except at lower bpr (reduced number of WC balls).

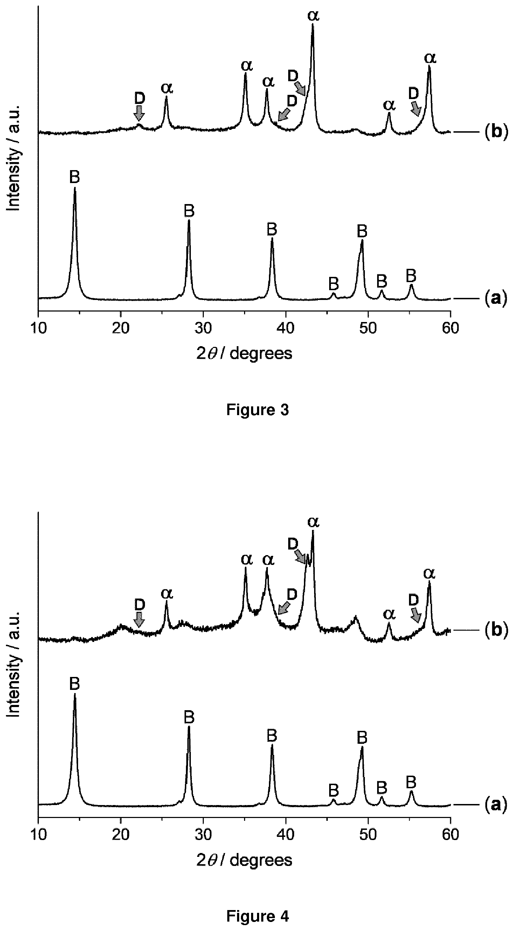

The PXRD analysis evidenced the full transformation of the boehmite phase in the precursor after 3 h ball milling **(Figure 3**). Based on PXRD phase analysis, the ball milled sample was composed of $\alpha$-$Al_2O_3$ as the predominant phase with minor $\alpha$-AlOOH, like in Example 1. The surface area of the ball milled powder was 110 $m^2$/g.

### Example 3

The ball milling experiment was performed under the same conditions and using the precursor as described in **Example 1,** except at lower bpr and using steel balls.

The PXRD analysis evidenced the full transformation of the boehmite phase in the precursor after 3 h ball milling **(Figure 4**). Based on PXRD phase analysis, the ball milled sample was composed of $\alpha$-$Al_2O_3$ as the predominant phase with minor $\alpha$-AlOOH, like in Example 2. The sample was additional composed of iron-based phases, which originated from the abrasion of steel balls during milling. The content of iron as determined by EDX analysis was 1.5 wt.%. The surface area of the ball milled powder was 108 $m^2/g$.

## Example 4

The ball milling experiment was performed using the precursor as described in **Example 1** in planetary ball mill using milling jar and balls made of steel.

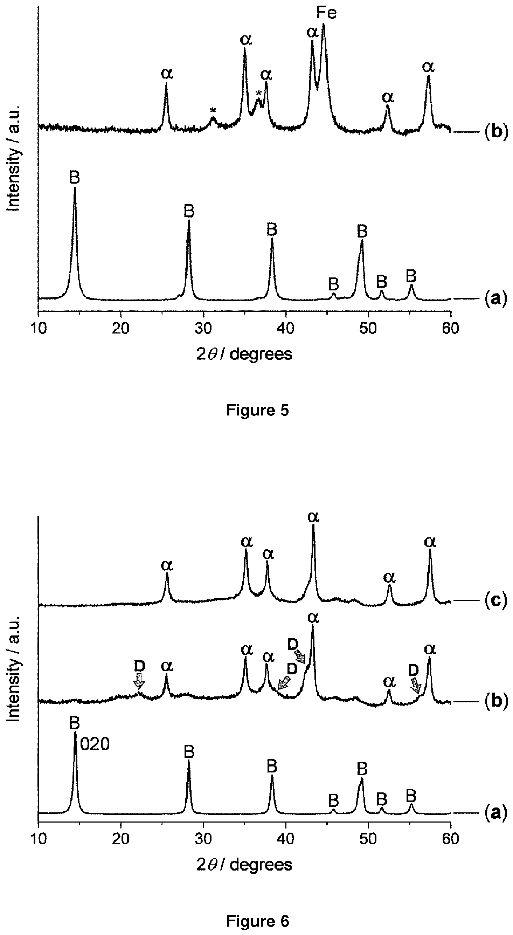

The PXRD analysis evidenced the full transformation of the boehmite phase in the precursor after 3 h ball milling to $\alpha$-Al$_2$O$_3$ **(Figure 5)**. No $\alpha$-AlOOH formation found in this case. The iron content in the sample was 22 wt.% as determined by EDX. The $S_{BET}$ after correction for iron content was 105 $m^2/g$ and $d^{Scherrer}$ = 18 nm.

## Example 5

Boehmite of $d^{Scherrer}$ = 20 nm (denoted as $\gamma$-AlOOH-20) was prepared by a hydrothermal treatment of aluminum hydroxide (Al(OH)$_3$, Sigma-Aldrich) adapting a literature method (Santos et al., Materials Research 2009, 12, 437-445, Filho et al., Materials Research 2016, 19, 659-668). In a typical synthesis, aluminum hydroxide was dispersed in deionized water in a molar Al:H$_2$O ratio of 50 in a Teflon-lined autoclave. The hydrothermal nucleation of boehmite was achieved by heating the above-prepared autoclave to 200°C and holding at this temperature for 72 h under autogenous pressure. The white solid was recovered by centrifugation, followed by drying in flowing air at 70°C for 12 h. The formation of phase pure boehmite was confirmed by PXRD **(Figure 6a)**, with $d^{Scherrer}$ = 20 nm.

The above sample was ball milled under the same conditions as in **Example 1.**

The PXRD analysis evidenced the full transformation of the boehmite phase in this precursor after 3 h ball milling **(Figure 6a,b)**. Based on PXRD phase analysis, the ball milled sample was composed of more than 70% $\alpha$-Al$_2$O$_3$ and the remaining being $\alpha$-AlOOH as can be seen from the relative intensity of the corresponding reflections. The $S_{BET}$ of the starting boehmite was 64 $m^2/g$ and after ball milling the $S_{BET}$ of 115 $m^2/g$ was obtained.

Like in **Example 1,** a part of the ball milled sample after WC removal was subjected to calcination at 550°C (2°C/min) in static air for 10 h. The calcination fully transformed the remaining diaspore to $\alpha$-Al$_2$O$_3$, producing the material with sole desired $\alpha$-Al$_2$O$_3$ phase **(Figure 6c).** The $S_{BET}$ of the calcined sample was 136 $m^2/g$ and $d^{Scherrer}$ = 18 nm.

## Example 6

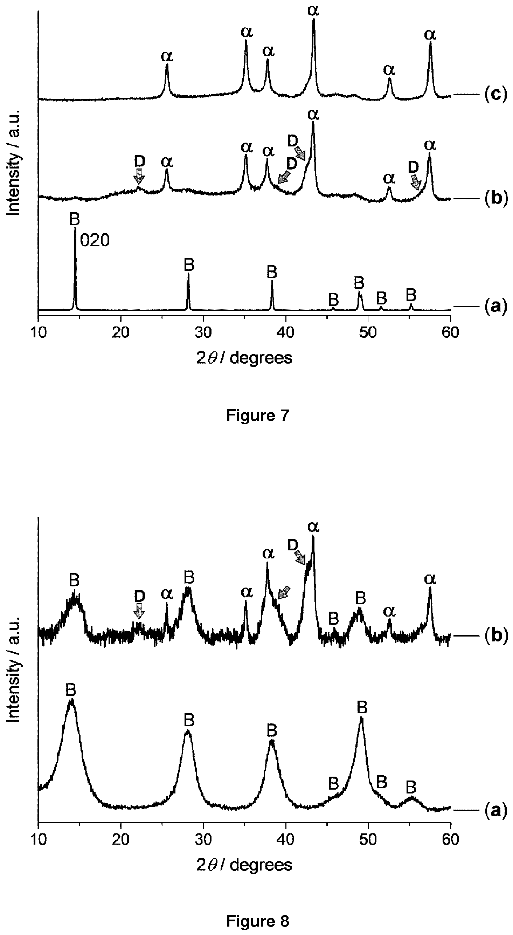

Boehmite of $d^{Scherrer}$ = 52 nm (denoted as $\gamma$-AlOOH-52) was prepared by a hydrothermal treatment of aluminum hydroxide hydrate (Al(OH)$_3$·xH$_2$O, Sigma-Aldrich) using the equivalent procedure as used in **Example 5.** The formation of phase-pure boehmite was confirmed by PXRD **(Figure 7a)**, with $d^{Scherrer}$ = 52.

The above sample was ball milled under the same conditions as in **Example 1.**

The PXRD analysis evidenced the full transformation of the boehmite phase in this precursor after 3 h ball milling **(Figure 7a,b)**. Based on PXRD phase analysis, the ball milled sample was composed of more than 70% $\alpha$-Al$_2$O$_3$ and the remaining being $\alpha$-AlOOH as can be seen from the relative intensity of the corresponding reflections. The $S_{BET}$ of the starting boehmite was 10 $m^2/g$ and after ball milling the $S_{BET}$ of 103 $m^2/g$ was obtained.

Like in **Example 1,** a part of the ball milled sample after WC removal was subjected to calcination at 550°C (2°C/min) in static air for 10 h. The calcination fully transformed the remaining diaspore to $\alpha$-Al$_2$O$_3$, producing the material with sole desired $\alpha$-Al$_2$O$_3$ phase (**Figure 7c**). The $S_{BET}$ of the calcined sample was 130 $m^2/g$ and $d^{Scherrer}$ = 19 nm.

## Example 7

Boehmite of $d^{Scherrer}$ = 4 nm (denoted as $\gamma$-AlOOH-4) was obtained from Sasol. This sample was ball milled under the same conditions as detailed in **Example 1.** After the experiment the powder was removed from the vial and subjected for WC removal, followed by characterization by PXRD.

The PXRD analysis (**Figure 8**) evidenced that the boehmite is not fully transformed after 3 h ball milling. The ball milled sample was composed of three phases, unconverted boehmite precursor, intermediate diaspore phase, and $\alpha$-Al$_2$O$_3$.

## Example 8

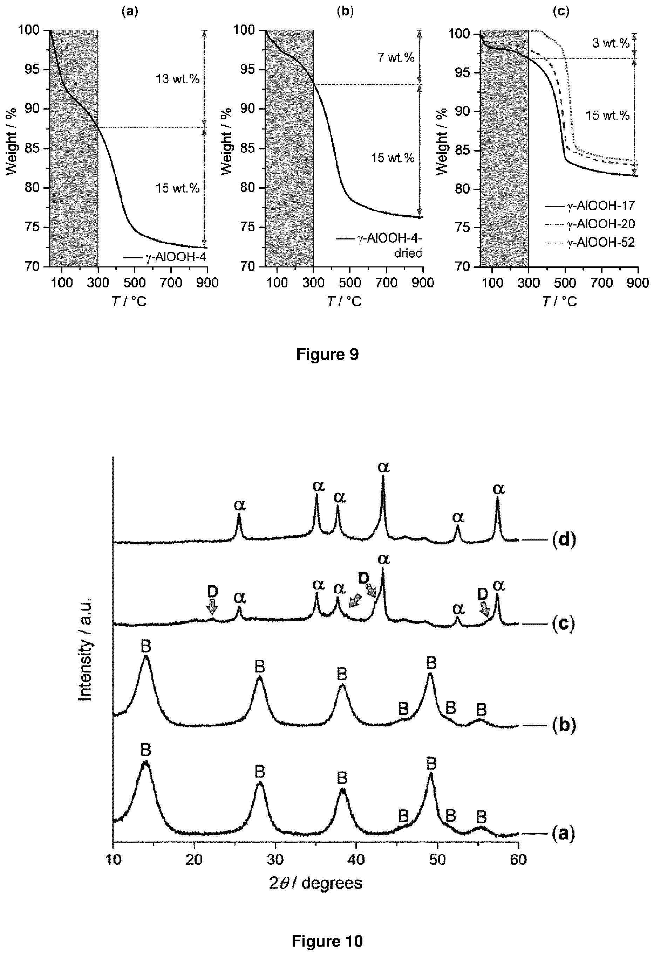

The boehmite precursor in **Example 7** (i.e. $\gamma$-AlOOH-4) was subjected to drying at 140°C in static air for 12 h. The obtained sample was denoted as $\gamma$-AlOOH-4-dried. This drying step enabled to reduce the additional water content in $\gamma$-AlOOH-4 as this might have effect on the efficiency of milling as observed in **Example 7**. The TGA analysis of the dried sample evidenced a reduced loss of additional water (7 wt.%, see shaded area in **Figure 9b**) compared to 13 wt.% in the undried sample (**Figure 9a**). The content of additional water in y-AlOOH-17, $\gamma$-AlOOH-20, and $\gamma$-AlOOH-52 was

none or less than 3 wt.% (**Figure 9c**) and thus these samples did not need a drying step. The drying procedure did not change the crystallinity of the sample as evidenced by its PXRD **(Figure 10,** see **a,b**).

The dried sample was ball milled under the same conditions as detailed in **Example 1.** After the experiment, the powder was removed from the vial and subjected for WC removal, followed by characterization by PXRD.

The PXRD analysis evidenced the full transformation of $\gamma$-AlOOH-4-dried after 3 h ball milling **(Figure 10c)**. Based on PXRD phase analysis, the ball milled dried sample was composed of more than 70% $\alpha$-$Al_2O_3$ and the remaining was $\alpha$-AlOOH as can be seen from the relative intensity of the corresponding reflections. The $S_{BET}$ of the starting boehmite was 365 $m^2/g$ and after ball milling the $S_{BET}$ of 132 $m^2/g$ was obtained.

Like in **Example 1,** a part of the ball milled sample after WC removal was subjected to calcination at 550°C (2°C/min) in static air for 10 h. The calcination fully transformed the remaining diaspore to $\alpha$-$Al_2O_3$, producing the material with sole desired $\alpha$-$Al_2O_3$ phase **(Figure 10d)**. The $S_{BET}$ of the calcined sample was 140 $m^2/g$ and $d^{Scherrer}$ = 19 nm.

## Example 9

The ball milling experiment was performed under the same conditions and using the precursor boehmite as described in **Example 1,** except $Co_3O_4$ (Aldrich) was added to the milling jar together with $\gamma$-AlOOH-17 in an amount 15 wt.% of Co calculated to the amount of alumina.

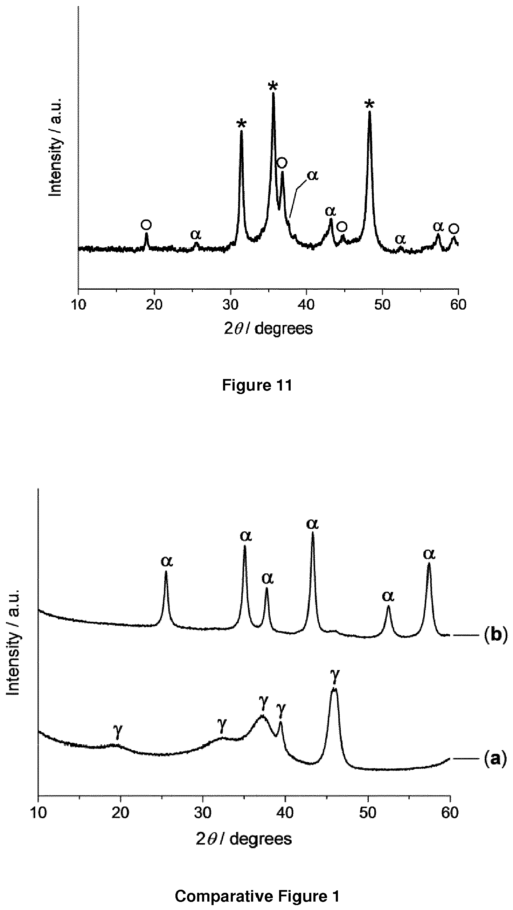

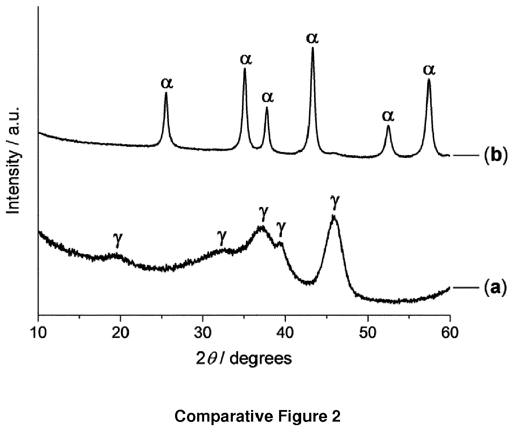

The PXRD analysis (**Figure 11**) evidenced the presence of alpha $Al_2O_3$ and $Co_3O_4$ phases. WC was also additionally present in this sample as this sample was not subjected to WC removal. The $S_{BET}$ of the sample was 90 $m^2/g$ and $d^{Scherrer}$ of $Co_3O_4$ obtained by the application of Scherrer equation to 311 crystal plane ($2\theta$ = 36.8) was 10 nm. The content of Co was 15 wt.% according to EDX analysis.

## Comparative Example 1

For comparison purpose boehmite precursor in **Example 1** (i.e. $\gamma$-AlOOH-17) was calcined at 550°C (1°C/min) in static air for 5 h. This pretreatment transformed $\gamma$-AlOOH-17 to $\gamma$-$Al_2O_3$ (**Comparative Figure 1a**). The latter sample is denoted as $\gamma$-$Al_2O_3$-17 and has the $S_{BET}$ of 109 $m^2/g$. This sample was used as the precursor for comparative ball milling experiment under the same conditions as detailed in **Example 1.**

The PXRD analysis (**Comparative Figure 1b**) evidenced the full transformation of $\gamma$-$Al_2O_3$-17 to $\alpha$-$Al_2O_3$ after 2 h ball milling. The $S_{BET}$ of the obtained sample was 64 $m^2/g$.

## Comparative Example 2

For yet another comparison purpose boehmite precursor in **Example 9** (i.e. $\gamma$-AlOOH-4) was calcined at 550°C (1°C/min) in static air for 5 h. This pretreatment transformed $\gamma$-AlOOH-4 to $\gamma$-$Al_2O_3$ (**Comparative Figure 2a**). The latter sample is denoted as $\gamma$-$Al_2O_3$-4 and has the $S_{BET}$ of 258 $m^2/g$. This sample was used as the precursor for comparative ball milling experiment under the same conditions as detailed in **Example 1.**

The PXRD analysis (**Comparative Figure 2b**) evidenced the full transformation of $\gamma$-$Al_2O_3$-4 to $\alpha$-$Al_2O_3$ after 2 h ball milling. The $S_{BET}$ of the obtained sample was 86 $m^2/g$.

## Claims

1. Process for converting $\gamma$-AlOOH·$x$H$_2$O with $0 \leq x < 2$ into nanoparticulate alpha alumina having particle sizes in the range of 1 to 50 nm and a high specific BET surface area of at least 90 $m^2/g$, **characterized by** subjecting said $\gamma$-AlOOH·$x$H$_2$O to a milling process in a ball mill with a milling jar and balls in a weight ratio of balls to said $\gamma$-AlOOH·$x$H$_2$O of 1 to 200, preferably 5 to 100, in a temperature range below the conversion temperature of nanocrystalline $\gamma$-AlOOH·$x$H$_2$O to $\gamma$-$Al_2O_3$, preferably in a temperature range of 10 to 200°C and for a period of time of 1 to 10 hours.

2. Process for converting $\gamma$-AlOOH·$x$H$_2$O with $0 \leq x < 2.0$ into nanoparticulate alpha alumina according to claim 1, wherein a vibration mill or a planetary mill is used as ball mill or other milling principle capable of bringing this phase change.

3. Process for converting $\gamma$-AlOOH·$x$H$_2$O with $0 \leq x < 2.0$ into nanoparticulate alpha alumina according to claim 1 or 2 wherein the balls are made of WC or hardened steel.

4. Process for converting $\gamma$-AlOOH·$x$H$_2$O with $0 \leq x < 2.0$ into nanoparticulate alpha alumina according to claim 1, 2 or 3, wherein the milling period is 1 to 10 hours.

5. Process for converting $\gamma$-AlOOH·$x$H$_2$O with $0 \leq x < 2.0$ into nanoparticulate alpha alumina according to any of the preceding claims wherein an additional water content ($x$H$_2$O) in the $\gamma$-AlOOH is below 20 wt.% and preferably below 15 wt.%.

6. Process for converting $\gamma$-AlOOH·$x$H$_2$O with $0 \leq x < 2.0$ into nanoparticulate alpha alumina according to any of the preceding claims wherein the milling product is additionally comprising alpha AlOOH, optionally in a weight ratio of up to 30 wt.% of the total amount of nanoparticulate alpha alumina and alpha AlOOH.

7. Process for converting $\gamma$-AlOOH·$x$H$_2$O with $0 \leq x < 2.0$ into nanoparticulate alpha alumina according to any of the preceding claims wherein the obtained milling product is subjected to a heat treatment at temperature in a range between 500-600°C.

8. Process for converting $\gamma$-AlOOH·$x$H$_2$O with $0 \leq x < 2.0$ into nanoparticulate alpha alumina according to any of the preceding claims wherein milling is performed upon addition of a metal and/or metal compound wherein the metal is selected from transition metals, main group metals or mixtures thereof.

9. Process for converting $\gamma$-AlOOH·$x$H$_2$O with $0 \leq x < 2.0$ into nanoparticulate alpha alumina according to claim 8 wherein the metal or metal compound is used in particulate form.

10. Process for converting $\gamma$-AlOOH·$x$H$_2$O with $0 \leq x < 2.0$ into nanoparticulate alpha alumina according to any of preceding claim 8 or 9 wherein the metal compound is selected from halides, pseudohalides, acid salts, nitrates, oxides.

11. High-surface area nanoparticulate alpha alumina, having a BET surface area of at least 90 m$^2$/g, preferably at least 100 m$^2$/g, more preferably at least 120 m$^2$/g, and even more preferably at least 130 m$^2$/g, and having a particle size in the range of 1 to 50 nm, preferably in the range of 1 to 30 nm, measured by TEM.

12. High-surface area nanoparticulate alpha alumina of claim 11, obtainable by a process according to any of claims 1 to 10.

13. High-surface area nanoparticulate alpha alumina, obtainable by a process according to any of claim 8 to 10, having a metal content of up to 20% by weight calculated on the total amount of the loaded alumina.

14. Use of the high-surface area nanoparticulate alpha alumina as claimed in any of claims 110 to 13 as catalyst or catalyst support for metal catalysts or in ceramics applications.

Figure 1

Figure 2

Figure 3

Figure 4

Figure 5

Figure 6

Figure 7

Figure 8

Figure 9

Figure 10

Figure 11

Comparative Figure 1

Comparative Figure 2

Europäisches
Patentamt
European
Patent Office
Office européen
des brevets

## EUROPEAN SEARCH REPORT

Application Number

EP 19 15 4220

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TONEJC A ET AL: "Comparison of the transformation sequence from gamma-AlOOH (boehmite) to alpha-Al2O3 (corundum) induced by heating and by ball milling", MATERIALS SCIENCE AND ENGINEERING: A, ELSEVIER, AMSTERDAM, NL, vol. 181-182, 15 May 1994 (1994-05-15), pages 1227-1231, XP024168169, ISSN: 0921-5093, DOI: 10.1016/0921-5093(94)90836-2 [retrieved on 1994-05-15] | 1-7,11, 12 | INV. C01F7/44 B01J21/04 |
| Y | * the whole document * | 8-10,13 | |
| X | EP 0 554 908 A1 (NORTON CO [US]) 11 August 1993 (1993-08-11) * examples * * page 2, lines 56-57 * | 11,14 | |
| X | MA H ET AL: "Synthesis and processing of nano-alpha-Al2O3 powders", TITANIUM POWDER METALLURGY AND ADDITIVE MANUFACTURING : 4TH INTERNATIONAL CONFERENCE ON TITANIUM POWDER METALLURGY & ADDITIVE MANUFACTURING (PMTI 2017) : SELECTED, PEER REVIEWED PAPERS FROM THE 4TH INTERNATIONAL CONFERENCE ON POWDER METALLURGY OF TIT, vol. 206-213, 9 September 2001 (2001-09-09), pages 43-46, XP008025131, ISSN: 1013-9826 ISBN: 978-3-0357-1163-9 * table 1 * * final paragraph (p. 46) * | 11,14 | TECHNICAL FIELDS SEARCHED (IPC) C01F B01J |

-/--

The present search report has been drawn up for all claims

| Place of search | Date of completion of the search | Examiner |
|---|---|---|
| Munich | 11 July 2019 | Stratford, Katja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 15 4220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FERNANDO D. CORTES-VEGA ET AL: "Room-temperature synthesis of chi-Al2O3 and ruby (alpha-Cr:Al2O3)", CRYSTENGCOMM, vol. 20, no. 25, 21 May 2018 (2018-05-21), pages 3505-3511, XP055603189, GB ISSN: 1466-8033, DOI: 10.1039/C8CE00360B * the whole document * | 8-10,13 | |
| A | TONEJC A ET AL: "Equivalence of ball milling and thermal treatment for phase transitions in the Al2O3 system", JOURNAL OF ALLOYS AND COMPOUNDS, ELSEVIER SEQUOIA, LAUSANNE, CH, vol. 204, no. 1-2, 1 February 1994 (1994-02-01), pages L1-L3, XP024176594, ISSN: 0925-8388, DOI: 10.1016/0925-8388(94)90055-8 [retrieved on 1994-02-01] * the whole document * | 1-14 | |
| A | TONEJC A ET AL: "TRANSFORMATION OF -AlOOH (BOEHMITE) AND Al(HO)3 (GIBBSITE) TO X-Al2O3 (CORUNDUM) INDUCED BY HIGH ENERGY BALL MILLING", JOURNAL OF MATERIALS SCIENCE LETTERS, CHAPMAN AND HALL LTD. LONDON, GB, vol. 13, no. 7, 1 April 1994 (1994-04-01), page 519/520, XP000435080, ISSN: 0261-8028, DOI: 10.1007/BF00540186 * the whole document * | 1-14 | TECHNICAL FIELDS SEARCHED (IPC) |

The present search report has been drawn up for all claims

| Place of search | Date of completion of the search | Examiner |
|---|---|---|
| Munich | 11 July 2019 | Stratford, Katja |

page 2 of 2

## ANNEX TO THE EUROPEAN SEARCH REPORT
## ON EUROPEAN PATENT APPLICATION NO.

EP 19 15 4220

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2019

| Patent document cited in search report | | Publication date | Patent family member(s) | | Publication date |
|---|---|---|---|---|---|
| EP 0554908 | A1 | 11-08-1993 | AT | 139982 T | 15-07-1996 |
| | | | AU | 650382 B2 | 16-06-1994 |
| | | | BR | 9300492 A | 10-08-1993 |
| | | | CA | 2088282 A1 | 06-08-1993 |
| | | | DE | 69303383 D1 | 08-08-1996 |
| | | | DE | 69303383 T2 | 06-02-1997 |
| | | | EP | 0554908 A1 | 11-08-1993 |
| | | | JP | 2944839 B2 | 06-09-1999 |
| | | | JP | H05345611 A | 27-12-1993 |
| | | | US | 6048577 A | 11-04-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5641469 A

### Non-patent literature cited in the description

- **IVANOVA.** *Kinetics and Catalysis,* 2012, vol. 53, 425-439
- **AAD et al.** *ChemCatChem,* 2017, vol. 9, 2106-2117
- **STEINER et al.** *Journal of the American Ceramic Society,* 1971, vol. 54, 412-413
- **SHELLEMAN et al.** *Journal of Non-Crystalline Solids,* 1986, vol. 82, 277-285
- **YARBROUGH et al.** *Journal of Materials Research,* 1987, vol. 2, 494-515
- **MCHALE et al.** *Science,* 1997, vol. 277, 788-791
- **PERROTTA et al.** *Materials Research Innovations,* 1998, vol. 2, 33-38
- **YANAGIDA ; YAMAGICHI.** *Journal of the Ceramic Association of Japan,* 1966, vol. 74, 94-100
- **TSUCHIDA ; KODAIRA.** *Journal of Materials Science,* 1990, vol. 25, 4423-4426
- **LAINE et al.** *Nature Materials,* 2006, vol. 5, 710-712
- **SUCHANEK ; GARCÉS.** *CrystEngComm,* 2010, vol. 12, 2996-3002
- **ZIELIŃSKI et al.** *Journal of Materials Research,* 1993, vol. 8, 2985-2992
- **SIDHESWARAN ; BHAT.** *Indian Journal of Chemical Technology,* 1997, vol. 4, 206-209
- **SANTOS et al.** *Materials Research,* 2009, vol. 12, 437-445
- **FILHO et al.** *Materials Research,* 2016, vol. 19, 659-668
- **KHARAT et al.** *Asian Journal of Chemistry,* 2008, vol. 20, 915-924
- **MUNHOZ et al.** *Materials Science Forum,* 2015, vol. 820, 131-136
- **PANIAS ; PASPALIARIS.** *Erzmetall,* 2003, vol. 56, 75-81
- **ARCHER et al.** *Journal of Analytical Atomic Spectrometry,* 2003, vol. 18, 1493-1496
- **BRUNAUER et al.** *Journal of the American Chemical Society,* 1938, vol. 60, 309-319